# FASCICULE DE BREVET EUROPEEN

(11) **EP 2 467 277 B1**
(45) Date de publication et mention de la délivrance du brevet: **16.10.2013**
(21) Numéro de dépôt: 10752883.8
(22) Date de dépôt: 28.07.2010
(51) Int. Cl.: B60K 17/346, B60K 23/08, B60W 30/18

(54) **PROCEDE ET DISPOSITIF DE DISTRIBUTION D'UN COUPLE MOTEUR ENTRE UN TRAIN AVANT ET UN TRAIN ARRIERE DE VEHICULE AUTOMOBILE MUNI DE QUATRE ROUES MOTRICES**
VERFAHREN UND VORRICHTUNG ZUR VERTEILUNG DES MOTORDREHMOMENTS ZWISCHEN FRONT- UND RÜCKTEIL EINES KRAFTFAHRZEUGES MIT ALLRADANTRIEB
METHOD AND DEVICE FOR DISTRIBUTING ENGINE TORQUE BETWEEN THE FRONT END AND THE REAR END OF A MOTOR VEHICLE WITH FOUR DRIVE WHEELS

(30) Priorité: 20.08.2009 FR 0955718; 12.04.2010 FR 1052778
(43) Date de publication de la demande: 27.06.2012
(73) Titulaire: Renault S.A.S., 92100 Boulogne-Billancourt (FR)
(72) Inventeur: MONTI, Alessandro, F-92250 La Garenne Colombes (FR); POTHIN, Richard, F-78760 Jouars-pontchartrain (FR); ROMANI, Nicolas, F-75016 Paris (FR); SAINT-LOUP, Philippe, F-78760 Jouars-pontchartrain (FR)
(86) Numéro de dépôt international: PCT/FR2010/051595
(87) Numéro de publication internationale: WO 2011/020963

(56) Documents cités:
- WO-A1-2005/009772
- US-A- 5 270 930
- US-A- 5 752 211

## Description

### DOMAINE TECHNIQUE DE L'INVENTION

L'invention concerne la distribution d'un couple moteur entre un train avant et un train arrière de véhicule automobile muni de quatre roues motrices.

En particulier, l'invention concerne le transfert d'un couple moteur du train avant vers le train arrière d'un tel véhicule.

### ETAT DE LA TECHNIQUE ANTERIEURE

Actuellement, les véhicules ayant quatre roues motrices, appelés également véhicules tout terrain, sont destinés à franchir des obstacles de toute sorte et nécessitent d'être équipés d'une motricité adaptée aux conditions de déplacement du véhicule. En effet, lorsque le véhicule est en mode tout terrain, les conditions de déplacement du véhicule sont contraignantes et la vitesse du véhicule est alors faible ou moyenne.

Il est intéressant de pouvoir améliorer la motricité et la consommation du véhicule lors, notamment, du démarrage du véhicule et du franchissement d'obstacles.

On peut citer, par exemple, le brevet américain US 5,752,211 qui décrit une méthode pour distribuer un couple moteur entre un train avant et un train arrière dans laquelle on calcule un décalage de vitesse entre les trains qui est une fonction cubique de la vitesse du véhicule et qui est soustraite à une commande de distribution de couple. Mais cette méthode ne tient pas compte des conditions de déplacement du véhicule en mode tout terrain, notamment lorsque la vitesse du véhicule est particulièrement faible ou moyenne.

On peut également citer la demande de brevet européen EP 1188597, qui décrit un dispositif de contrôle de la distribution du couple moteur d'un véhicule équipé de quatre roues motrices à partir d'une détection de variation du diamètre des pneus due à une usure ou un changement des pneus. Mais ce document ne tient pas compte des conditions de déplacement du véhicule en mode tout terrain.

En outre, la demande de brevet européen EP 1275549, décrit une stratégie de répartition de couple entre les trains avant et arrière en fonction de différents signaux tels que les vitesses des roues, le régime du moteur, la position de la pédale d'accélérateur. Ce document propose une méthode pour optimiser la consigne de distribution du couple moteur entre les deux trains, mais il ne décrit pas comment est calculée la consigne de distribution du couple moteur.

Par ailleurs, la demande de brevet japonais JP 10119598, décrit un système de contrôle qui réduit la puissance motrice appliquée aux roues arrières et augmente la puissance motrice appliquée aux roues avant lorsque les roues arrières se mettent à patiner. Mais il ne décrit pas non plus comment est calculée la consigne de distribution de puissance.

### EXPOSE DE L'INVENTION

Un des buts de l'invention est de fournir un moyen pour améliorer la distribution du couple moteur entre un train avant et un train arrière d'un véhicule muni de quatre roues motrices et qui est équipé d'une source de couple de traction comme un moteur électrique, un moteur à combustion interne ou une solution hybride.

Un autre but de l'invention est de fournir un moyen pour distribuer le couple moteur entre les trains avant et arrière du véhicule lorsque ce dernier est en mode tout terrain.

Un autre but de l'invention est encore de fournir un moyen pour élaborer une consigne de distribution de couple adaptée afin de privilégier la capacité de franchissement d'obstacles tout en réduisant la consommation en carburant du véhicule.

Selon un aspect de l'invention, il est proposé un dispositif de distribution d'un couple moteur entre un train avant et un train arrière d'un véhicule automobile à au moins quatre roues motrices, comprenant un actionneur piloté et configuré pour distribuer le couple moteur, et des moyens de calcul pour calculer une vitesse du véhicule et un écart de vitesse entre le train avant et le train arrière.

Ce dispositif comprend des moyens d'élaboration pour élaborer une consigne de distribution de couple destinée à l'actionneur, les moyens d'élaboration comportant un moyen de détermination initial pour déterminer une première valeur de la consigne de distribution de couple égale, soit à une constante maximum si la vitesse du véhicule est inférieure à un seuil bas, soit à une fonction de la vitesse du véhicule et de l'écart de vitesse si la vitesse du véhicule est comprise entre le seuil bas et un seuil haut, soit à zéro si la vitesse du véhicule est supérieure au seuil haut.

Ainsi, on fournit un moyen pour calculer une consigne de distribution de couple moteur en fonction des conditions de déplacement du véhicule en mode tout terrain afin d'améliorer la consommation en carburant et la capacité de franchissement du véhicule automobile.

En outre, ce dispositif permet de privilégier le franchissement d'obstacles et/ou la consommation en carburant en fonction de la situation de conduite en mode tout terrain.

Avantageusement, le moyen de détermination initial est configuré pour déterminer la première valeur de la consigne de distribution de couple comprise dans un intervalle dont les bornes varient en fonction de la vitesse du véhicule, les bornes étant distinctes l'une de l'autre lorsque la vitesse du véhicule est comprise entre le seuil bas et le seuil haut.

Ainsi, on peut transférer un couple moteur même si l'écart de vitesse entre les trains est nul, on garantit alors une prestation de franchissement, et on garantit une réduction de la consommation par rapport à la stratégie appliquée lorsque la vitesse du véhicule est inférieure à un seuil bas.

Le moyen de détermination initial peut également être configuré pour déterminer un seuil de vitesse intermédiaire compris entre le seuil bas et le seuil haut, la borne inférieure de l'intervalle étant nulle lorsque la vitesse du véhicule est comprise entre le seuil de vitesse intermédiaire et le seuil haut.

Dans ce cas, la consommation en carburant est améliorée.

Les moyens d'élaboration peuvent, en outre, comprendre un moyen de détermination secondaire pour déterminer une deuxième valeur de la consigne de distribution de couple inférieure à la première valeur et égale, soit à une constante minimum si la vitesse du véhicule est inférieure à un seuil minimum, soit uniquement à une fonction de la vitesse du véhicule si la vitesse du véhicule est comprise entre le seuil minimum et un seuil maximum, soit à zéro si la vitesse du véhicule est supérieure au seuil maximum, et un moyen de sélection pour sélectionner la première ou la deuxième valeur afin d'élaborer la consigne de distribution de couple.

Alternativement, si les moyens de calcul sont configurés pour calculer un rapport de vitesse engagé, les moyens d'élaboration peuvent comprendre un moyen de détermination secondaire pour déterminer une deuxième valeur de la consigne de distribution de couple inférieure à la première valeur et égale, soit à une constante minimum si la vitesse du véhicule est inférieure à un seuil minimum alors que le rapport de vitesse engagé est le premier rapport de marche avant ou le rapport de marche arrière, soit à zéro si la vitesse du véhicule est supérieure au seuil minimum ou si le rapport de vitesse engagé est différent du premier rapport de marche avant et du rapport de marche arrière, et un moyen de sélection pour sélectionner la première ou la deuxième valeur afin d'élaborer la consigne de distribution de couple.

Lorsque la situation de conduite du véhicule ne nécessite pas une distribution de couple maximum, on réduit la consigne de distribution de couple en appliquant une consigne de distribution de couple minimum inférieure à la consigne de distribution de couple maximum précédente. La consommation en carburant est alors améliorée.

Les moyens de calcul peuvent être configurés pour calculer une position de la pédale d'accélération et un rapport de vitesse engagé, et les moyens d'élaboration comprennent un moyen de commande de la sélection configuré pour activer un signal de commande de sélection si la position de la pédale d'accélération est supérieure à un seuil d'accélération haut et si le rapport de vitesse engagé est non nul, le moyen de sélection étant configuré pour recevoir le signal de commande de sélection et pour sélectionner la première valeur si le signal de commande de sélection est activé ou la deuxième valeur si le signal de commande de sélection est désactivé.

Les moyens d'élaboration peuvent également comprendre un moyen de transmission pour transmettre la valeur sélectionnée par le moyen de sélection, ou une valeur nulle, afin d'élaborer la consigne de distribution de couple, et un moyen de commande de la transmission configuré pour activer pendant une durée d'arrêt un signal de commande de transmission si la vitesse du véhicule est inférieure à un seuil d'arrêt, le moyen de transmission étant configuré pour recevoir le signal de commande de transmission et pour transmettre la valeur sélectionnée par le moyen de sélection si le signal de commande de transmission est désactivé ou la valeur nulle si le signal de commande de transmission est activé.

Alternativement, si les moyens de calcul sont configurés pour calculer une position de la pédale d'accélération, on peut prévoir que les moyens d'élaboration comprennent un moyen de transmission pour transmettre la valeur sélectionnée par le moyen de sélection, ou une valeur nulle, afin d'élaborer la consigne de distribution de couple, et un moyen de commande de la transmission configuré pour activer pendant une durée d'arrêt un signal de commande de transmission si la vitesse du véhicule décroit en dessous d'un seuil d'arrêt alors que la pédale d'accélération n'est pas enfoncée, le moyen de transmission étant configuré pour recevoir le signal de commande de transmission et pour transmettre la valeur sélectionnée par le moyen de sélection si le signal de commande de transmission est désactivé ou la valeur nulle si le signal de commande de transmission est activé.

Ainsi, l'endurance de la chaîne de distribution du couple moteur et le bruit parasite généré lors d'un changement de rapport de vitesse avant/arrière sont améliorés.

Selon un autre aspect de l'invention, il est proposé un procédé de distribution d'un couple moteur entre un train avant et un train arrière d'un véhicule automobile à au moins quatre roues motrices, dans lequel on calcule une vitesse du véhicule et un écart de vitesse entre le train avant et le train arrière.

Dans ce procédé, on détermine une première valeur de consigne de distribution de couple égale, soit à une constante maximum si la vitesse du véhicule est inférieure à un seuil bas, soit à une fonction de la vitesse du véhicule et de l'écart de vitesse si la vitesse du véhicule est comprise entre le seuil bas et un seuil haut, soit à zéro si la vitesse du véhicule est supérieure au seuil haut, et on distribue le couple moteur à partir de la consigne de distribution de couple déterminée.

Avantageusement, lors de l'étape de détermination, on détermine en outre la première valeur de la consigne de distribution de couple comprise dans un intervalle dont les bornes varient en fonction de la vitesse du véhicule, les bornes étant distinctes l'une de l'autre lorsque la vitesse du véhicule est comprise entre le seuil bas et le seuil haut.

Lors de l'étape de détermination, on peut en outre déterminer un seuil de vitesse intermédiaire compris entre le seuil bas et le seuil haut, la borne inférieure de l'intervalle étant nulle lorsque la vitesse du véhicule est comprise entre le seuil de vitesse intermédiaire et le seuil haut.

On peut également déterminer une deuxième valeur de consigne de distribution de couple inférieure à la première valeur et égale, soit à une constante minimum si la vitesse du véhicule est inférieure à un seuil minimum, soit uniquement à une fonction de la vitesse du véhicule si la vitesse du véhicule est comprise entre le seuil minimum et un seuil maximum, soit à zéro si la vitesse du véhicule est supérieure au seuil maximum, et sélectionner la première ou la deuxième valeur pour la détermination de la consigne de distribution de couple.

On peut en outre calculer une position de la pédale d'accélération et un rapport de vitesse engagé, activer un signal de commande de sélection si la position de la pédale d'accélération est supérieure à un seuil d'accélération et si le rapport de vitesse engagé est non nul, et sélectionner la première valeur si le signal de commande de sélection est activé ou la deuxième valeur si le signal de commande de sélection est désactivé.

On peut encore activer un signal de commande de transmission si la vitesse du véhicule est inférieure à un seuil d'arrêt pendant une durée d'arrêt, et transmettre la première ou la deuxième valeur sélectionnée si le signal de commande de transmission est activé ou une valeur nulle si le signal de commande de transmission est désactivé pour la détermination de la consigne de distribution de couple.

### BREVE DESCRIPTION DES FIGURES

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1 illustre schématiquement un dispositif de distribution d'un couple moteur d'un véhicule automobile ;
- la figure 2 illustre schématiquement un mode de réalisation des moyens d'élaboration d'une consigne de distribution de couple ;
- la figure 3 illustre schématiquement un mode de réalisation d'un moyen de détermination initial d'une première valeur d'une consigne de distribution de couple ;
- la figure 4 illustre schématiquement un mode de mise en oeuvre d'une stratégie d'activation/désactivation d'un signal de commande de transmission ; et
- la figure 5 illustre schématiquement un mode de mise en oeuvre d'une stratégie d'activation/désactivation d'un signal de commande de sélection ;
- la figure 6 illustre schématiquement une variante de réalisation d'un mode de mise en oeuvre d'une stratégie d'activation/désactivation d'un signal de commande de transmission ;
- la figure 7 illustre schématiquement une variante d'un mode de réalisation des moyens d'élaboration d'une consigne de distribution de couple ;
- la figure 8 illustre schématiquement une variante d'un mode de mise en oeuvre d'une stratégie d'activation/désactivation d'un signal de commande de sélection.

Pour plus de clarté, les éléments identiques ou similaires sont repérés par des signes de référence identiques sur l'ensemble des figures.

### DESCRIPTION DETAILLEE D'UN MODE DE REALISATION

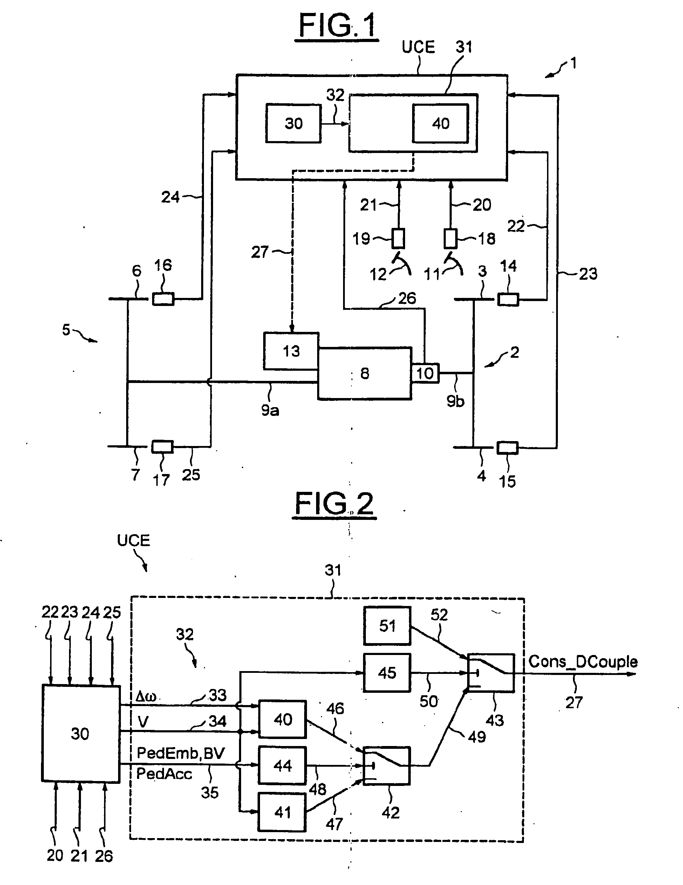

Sur la figure 1, on a représenté un dispositif de distribution 1 d'un couple moteur d'un véhicule automobile.

Le véhicule automobile comprend un train avant 2 sur lequel sont montées deux roues avant 3 et 4, un train arrière 5 sur lequel sont montées deux roues arrière 6 et 7, et une source de couple moteur 8 destinée à entraîner les roues 3, 4, 6 et 7 du véhicule automobile. Cette source de couple moteur 8 entraîne les roues arrière 6, 7 par un moyen de transmission arrière 9a et entraîne les roues avant 3, 4 par l'intermédiaire d'un moyen de transmission avant 9b. La source de couple moteur 8 peut être un moteur électrique, un moteur à combustion interne, ou une solution hybride. Le véhicule automobile comprend en outre une boîte de vitesses 10 pour transmettre le couple moteur aux roues 3, 4, 6 et 7 du véhicule, une pédale d'accélérateur 11 et une pédale d'embrayage 12. On notera que la pédale d'embrayage 12 est optionnelle, en effet, le véhicule peut être équipé d'une boîte de vitesse automatisée et dans ce cas le véhicule ne comprend pas de pédale d'embrayage.

Le dispositif de distribution 1 comprend une unité de commande électronique UCE, un actionneur piloté 13, et des capteurs de vitesse 14 à 17 destinés à mesurer respectivement la vitesse de chacune des roues 3, 4, 6 et 7 du véhicule automobile, ainsi que deux capteurs de position 18 et 19 pour mesurer respectivement les positions de la pédale d'accélérateur 11 et de la pédale d'embrayage 12.

Le procédé de distribution d'un couple moteur entre un train avant et un train arrière de véhicule automobile muni de quatre roues motrices peut être implémenté dans l'unité de commande électronique UCE du dispositif de distribution 1.

L'UCE est configurée pour recevoir la position de la pédale d'accélérateur 11 émise depuis le capteur de position 18 par une connexion 20, une position de la pédale d'embrayage 12 émise depuis le capteur de position 19 par une connexion 21, les vitesses des roues 3, 4, 6 et 7 émises respectivement par les capteurs de vitesse 14 à 17 et transmises respectivement par des connexions 22 à 25.

L'UCE est en outre configurée pour recevoir l'information du rapport de vitesse engagé depuis la boîte de vitesses 10 via une connexion 26. L'UCE permet d'élaborer une consigne de distribution de couple en fonction des informations de vitesse, de position et de rapport engagé.

L'UCE comprend en outre des moyens de calcul 30 pour calculer différentes informations à partir des informations reçues depuis les éléments du véhicule automobile et pour transmettre les informations calculées par un réseau filaire 32 vers des moyens d'élaboration 31. Ces moyens d'élaboration 31 sont inclus dans l'UCE et sont destinés à élaborer la consigne de distribution de couple pour la transmettre à l'actionneur piloté 13 via une connexion 27. Les moyens d'élaboration comportent au moins un moyen de détermination initial 40 pour déterminer une première valeur de la consigne de distribution de couple.

L'actionneur piloté 13 est configuré pour recevoir la consigne de distribution de couple émise depuis l'UCE par la connexion 27. Cet actionneur piloté 13 permet en outre de distribuer le couple moteur entres les trains avant et arrière 2, 5 du véhicule, notamment de transférer le couple moteur du train avant 2 vers le train arrière 5, à partir de la consigne de distribution de couple.

Sur la figure 2, on a représenté schématiquement un mode de réalisation des moyens d'élaboration 31 d'une consigne de distribution de couple *Cons_DCouple* et des moyens de calcul 30. Sur la figure 2, on a également représenté les moyens de calcul 30 et reporté certaines références décrites à la figure 1 précédente.

Les moyens de calcul 30 reçoivent les vitesses des roues 3, 4, 6 et 7 par les connexions 22 à 25 respectivement, afin de calculer une vitesse du véhicule V et un écart de vitesse Δω entre le train avant 2 et le train arrière 5. Ces moyens de calcul 30 reçoivent également la position de la pédale d'accélérateur PedAcc par la connexion 20, la position de la pédale d'embrayage PedEmb par la connexion 21, et le rapport de vitesses engagé BV par la connexion 26.

Le réseau filaire 32 comprend des connexions 33 à 35 pour transmettre respectivement l'écart de vitesse Δω, la vitesse du véhicule V et les informations du véhicule comprenant les positions de la pédale d'accélérateur PedAcc et d'embrayage PedEmb et le rapport de vitesse engagé BV.

Les moyens d'élaboration 31 comprennent
- le moyen de détermination initial 40,
- un moyen de détermination secondaire 41,
- un moyen de sélection 42,
- un moyen de transmission 43,
- un moyen de commande de la sélection 44, et
- un moyen de commande de la transmission 45.

Le moyen de détermination initial 40 reçoit l'écart de vitesse Δω et la vitesse du véhicule V, respectivement par les connexions 33 et 34. Ce moyen de détermination initial 40 permet de déterminer une première valeur Cₘₐₓ de la consigne de distribution de couple, et de transmettre cette première valeur Cₘₐₓ au moyen de sélection 42 par une connexion 46. La première valeur Cₘₐₓ est déterminée en fonction de la vitesse du véhicule V et de l'écart de vitesse Δω.

Le moyen de détermination secondaire 41 reçoit la vitesse du véhicule V par la connexion 34 et permet de déterminer une deuxième valeur Cₘᵢₙ de la consigne de distribution de couple et de transmettre cette deuxième valeur Cₘᵢₙ au moyen de sélection 42 par une connexion 47. La deuxième valeur Cₘᵢₙ est déterminée en fonction uniquement de la vitesse du véhicule V.

Le moyen de commande de la sélection 44 reçoit les positions des pédales d'accélérateur PedAcc et d'embrayage PedEmb ainsi que le rapport de vitesse engagé BV, par la connexion 35, de manière à activer ou désactiver un signal de commande de sélection Maxmin. Ce signal de commande de sélection Maxmin est transmis par une connexion 48 vers le moyen de sélection 42. Le signal de commande de sélection Maxmin est un signal booléen qui vaut « 1 » lorsqu'il est activé, et qui vaut « 0 » lorsqu'il est désactivé.

Le moyen de sélection 42 est configuré pour sélectionner soit la première valeur Cₘₐₓ, soit la deuxième valeur Cₘᵢₙ, et pour transmettre la valeur sélectionnée au moyen de transmission 43 via une connexion 49. En outre, le moyen de sélection 42 est configuré pour transmettre la première valeur Cₘₐₓ lorsque le signal de commande de sélection Maxmin est activé, et pour transmettre la deuxième valeur Cₘᵢₙ lorsque le signal de commande de sélection Maxmin est désactivé.

Par ailleurs, le moyen de commande de la transmission 45 est configuré pour recevoir la vitesse du véhicule V par la connexion 34 afin d'activer ou désactiver un signal de commande de transmission *Antibruit.* Ce moyen de commande de la transmission 45 transmet le signal de commande de transmission *Antibruit* en direction du moyen de transmission 43 par une connexion 50. Le signal de commande de transmission *Antibruit* est un signal booléen qui vaut « 0 » lorsque celui-ci est désactivé, et qui vaut « 1 » lorsque celui-ci est activé.

Le moyen de transmission 43 est configuré pour sélectionner, soit la valeur sélectionnée par le moyen de sélection 42, soit une valeur nulle, afin de transmettre le résultat sélectionné à l'actionneur piloté 13 par la connexion 27. Le moyen de transmission 43 sélectionne la valeur reçue par la connexion 49 depuis le moyen de sélection 42 lorsque le signal de commande de transmission *Antibruit* est désactivé, et sélectionne la valeur nulle lorsque le signal de commande de transmission *Antibruit* est activé. La valeur nulle est élaborée par un moyen 51 et est transmise par une connexion 52 vers le moyen de transmission 43.

Les moyens d'élaboration 31 élaborent une consigne de distribution de couple *Cons_DCouple* qui est, soit nulle, soit égale à une première valeur Cₘₐₓ qui correspond à une consigne maximum, soit égale à une deuxième valeur Cₘᵢₙ qui correspond à une consigne minimum.

Le moyen de détermination initial 40 ainsi que les moyens de commande 44 et 45 seront décrits aux figures suivantes.

Le moyen de détermination secondaire 41, quant à lui, permet de déterminer la deuxième valeur Cₘᵢₙ de la consigne de distribution de couple *Cons_DCouple* en fonction de la vitesse du véhicule uniquement. Trois différentes stratégies d'élaboration de la deuxième valeur Cₘᵢₙ peuvent être ainsi identifiées. Une stratégie de consigne à vitesse faible, une stratégie à vitesse moyenne et une stratégie à vitesse haute. La stratégie est alors adaptée à la situation de conduite en mode tout terrain du véhicule, en privilégiant le franchissement d'obstacles et/ou la consommation en carburant. En fonction de la vitesse du véhicule, on peut distinguer alors les trois différentes stratégies suivantes :
- lorsque le véhicule roule à vitesse faible, c'est-à-dire lorsque la vitesse du véhicule est inférieure à un seuil minimum, la deuxième valeur Cₘᵢₙ est constante et est égale à une constante minimum qui représente un compromis entre une prestation de franchissement et une réduction de la consommation en carburant, ainsi que la possibilité de répartir le couple sur les quatre roues en descente sans appuyer sur la pédale d'accélérateur, afin d'avoir une motricité optimale. Le seuil de vitesse minimum et la constante minimum sont réglables lors de la mise au point et sauvegardés dans une mémoire non volatile du véhicule.
- lorsque le véhicule roule à vitesse moyenne, c'est-à-dire lorsque la vitesse du véhicule V est comprise entre le seuil minimum et un seuil maximum, la deuxième valeur Cₘᵢₙ est fonction de la vitesse du véhicule V. Cette fonction est décroissante entre la constante minimum et zéro. Les prestations de franchissement sont ainsi garanties et la consommation en carburant est réduite par rapport à la stratégie à vitesse faible. Le seuil de vitesse maximum est également réglable lors de la mise au point et sauvegardé dans une mémoire non volatile.
- lorsque le véhicule roule à vitesse haute, c'est-à-dire lorsque la vitesse du véhicule V est supérieure au seuil maximum, la deuxième valeur Cₘᵢₙ est nulle. La consommation du véhicule est alors minimale.

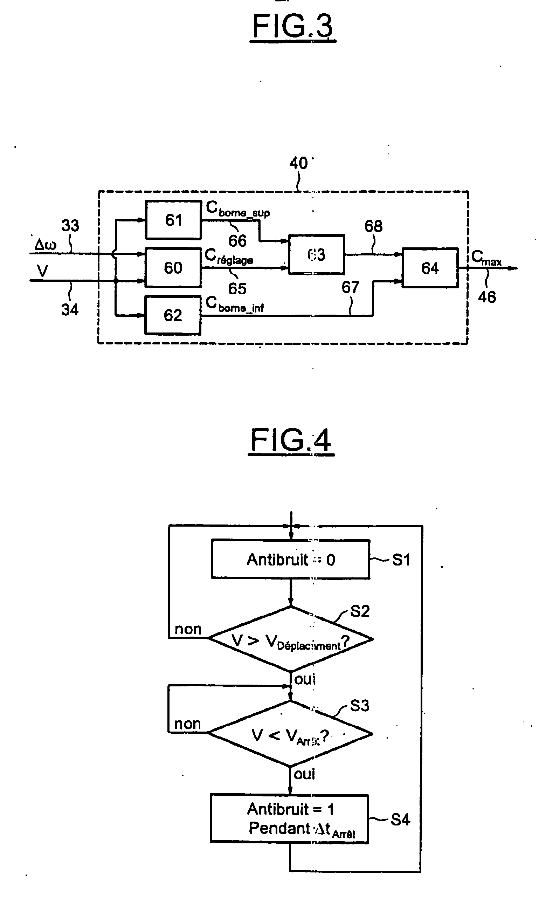

Sur la figure 3, on a représenté schématiquement un mode de réalisation d'un moyen de détermination initial 40 d'une première valeur Cₘₐₓ de la consigne de distribution de couple *Cons_DCouple.*

Le moyen de détermination initial 40 comprend un moyen de réglage 60, un moyen d'élaboration d'une borne supérieure 61, un moyen d'élaboration d'une borne inférieure 62, et deux moyens de comparaison 63, 64.

Le moyen de réglage 60 est configuré pour recevoir l'écart de vitesse Δω et la vitesse du véhicule V, respectivement par les connexions 33 et 34, afin d'élaborer une consigne de réglage C_{réglage} puis transmettre cette consigne de réglage C_{réglage} vers le premier moyen de comparaison 63 par une connexion 65. Le moyen d'élaboration d'une borne supérieure 61 reçoit la vitesse du véhicule V par la connexion 34 afin d'élaborer une borne supérieure Cborne_sup variant en fonction de la vitesse V. Ce moyen d'élaboration 61 transmet la borne supérieure Cborne_sup au premier moyen de comparaison 63 par une connexion 66. Le moyen d'élaboration d'une borne inférieure 62 reçoit également la vitesse du véhicule V par la connexion 34 afin d'élaborer une borne inférieure Cborne_inf. Ce moyen d'élaboration 62 transmet la borne inférieure Cborne_inf au deuxième moyen de comparaison 64 par une connexion 67.

Le premier moyen de comparaison 63 permet de sélectionner la valeur minimum entre la borne supérieure Cborne_sup et la consigne de réglage C_{réglage}, puis transmet le résultat au deuxième moyen de comparaison 64 par une connexion 68. Le deuxième moyen de comparaison 64 permet de sélectionner la valeur maximum entre la borne inférieure Cborne_inf et le résultat issu du premier moyen de comparaison 63 et transmet le résultat Cₘₐₓ, correspondant à la première valeur de la consigne de distribution de couple *Cons_DCouple,* au moyen de sélection 42 par la connexion 46.

Le moyen de détermination initial 40 permet de déterminer la consigne de réglage C_{réglage} à partir notamment de la vitesse du véhicule V et de l'écart de vitesse Δω. Le moyen de détermination initial 40 permet en outre de déterminer la première valeur Cₘₐₓ à partir de la consigne de réglage C_{réglage} de manière que cette première valeur Cₘₐₓ soit comprise dans un intervalle borné entre la borne supérieure Cborne_sup et la borne inférieure Cborne_inf.

Quatre différentes stratégies d'élaboration de la première valeur Cₘₐₓ peuvent être ainsi identifiées :
- une stratégie de consigne à vitesse faible,
- une stratégie de consigne à vitesse moyenne,
- une stratégie de consigne à vitesse haute, et
- une stratégie de consigne à vitesse très haute.

La stratégie est alors adaptée à la situation de conduite en mode tout terrain du véhicule en privilégiant le franchissement d'obstacles et/ou la consommation en carburant.

En fonction de la vitesse du véhicule V, on peut distinguer alors les quatre différentes stratégies suivantes :
- lorsque le véhicule roule à vitesse faible, c'est-à-dire lorsque la vitesse du véhicule V est inférieure à un seuil bas, la première valeur Cₘₐₓ est constante et est égale à une constante maximum. Cette constante maximum correspond au couple maximum supportable par l'actionneur piloté 13 et la chaîne de distribution de couple du véhicule. Dans ce cas, on notera que la borne supérieure Cborne_sup est égale à la borne inférieure Cborne_inf et que ces bornes sont égales à la constante maximum.

- lorsque le véhicule roule à vitesse moyenne, c'est-à-dire lorsque la vitesse du véhicule V est comprise entre le seuil bas et un seuil de vitesse intermédiaire, la première valeur Cₘₐₓ est fonction de la vitesse du véhicule V et de l'écart de vitesse Δω. En outre, cette première valeur Cₘₐₓ peut être bornée inférieurement par la borne Cborne_inf et supérieurement par la borne Cborne_sup. Ainsi, un distribution de couple peut être établi lorsqu'il n'y a pas d'écart de vitesse Δω entre les deux trains 2, 5 du véhicule. Les prestations de franchissement sont ainsi garanties et la consommation est réduite par rapport à la stratégie à vitesse faible.
- lorsque le véhicule roule à vitesse haute, c'est-à-dire lorsque la vitesse du véhicule V est comprise entre le seuil de vitesse intermédiaire et un seuil haut, la première valeur Cₘₐₓ est fonction de la vitesse du véhicule V et de l'écart de vitesse Δω. En outre, dans cette stratégie à vitesse haute, la première valeur Cₘₐₓ peut être bornée supérieurement par la borne Cborn_sup, et la borne inférieure Cborn_inf est nulle. La consommation du véhicule est alors améliorée. Par ailleurs, lorsqu'il n'y a pas d'écart de vitesse entre les deux trains du véhicule, c'est-à-dire que l'écart de vitesse Δω=0, la consigne de réglage C_{réglage} est alors nulle et la première valeur Cₘₐₓ est également nulle.
- lorsque le véhicule roule à vitesse très haute, c'est-à-dire que la vitesse du véhicule V est supérieure au seuil haut, la première valeur Cₘₐₓ est nulle, en outre, les bornes supérieure Cborn_sup et inférieure Cborn_inf sont nulles également. La consommation du véhicule est alors minimale.

Lors des quatre stratégies implémentées dans le moyen de détermination initial 40, les seuils de vitesse et les bornes Cborn_sup, Cborn_inf utilisées sont réglables lors de la mise au point et sauvegardés dans une mémoire non volatile du véhicule. On notera également que les bornes supérieure Cborn_sup et inférieure Cborn_inf varient en fonction de la vitesse de façon décroissante entre la constante maximum et zéro.

Sur la figure 4, on a représenté schématiquement un mode de mise en oeuvre d'une stratégie d'activation/désactivation d'un signal de commande de transmission *Antibruit.*

Cette stratégie d'activation/désactivation du signal de commande de transmission *Antibruit* peut être implémentée dans le moyen de commande de la transmission 45 décrit précédemment. Cette stratégie d'activation/désactivation permet d'activer ou de désactiver le signal de commande de transmission *Antibruit* afin de commander le moyen de transmission 43.

Cette stratégie d'activation/désactivation comprend une première étape S1 dans laquelle on initialise le signal de commande de transmission *Antibruit* à zéro. Puis, on effectue une deuxième étape S2 dans laquelle on compare la vitesse courante du véhicule V avec un seuil de vitesse de déplacement du véhicule V_{déplacement}. Si la vitesse du véhicule V est supérieure au seuil de vitesse de déplacement V_{déplacement}, on effectue alors une troisième étape S3 de comparaison, et on effectue à nouveau la première étape S1 dans le cas contraire. Lorsque la vitesse du véhicule V est supérieure au seuil de vitesse de déplacement V_{déplacement}, on considère que le véhicule est dans un état roulant. Lors de la troisième étape S3 de comparaison, on compare la vitesse du véhicule V avec un seuil d'arrêt V_{arrêt}. Si la vitesse du véhicule V est inférieure au seuil d'arrêt V_{arrêt}, on effectue une quatrième étape S4 et on effectue à nouveau la troisième étape S3 de comparaison dans le cas contraire. Lors de la quatrième étape S4, on active le signal de commande de transmission *Antibruit* pendant une durée d'arrêt Δt_{arrêt}. Puis, à la fin de cette durée d'arrêt Δt_{arrêt}, on effectue à nouveau la première étape d'initialisation S1.

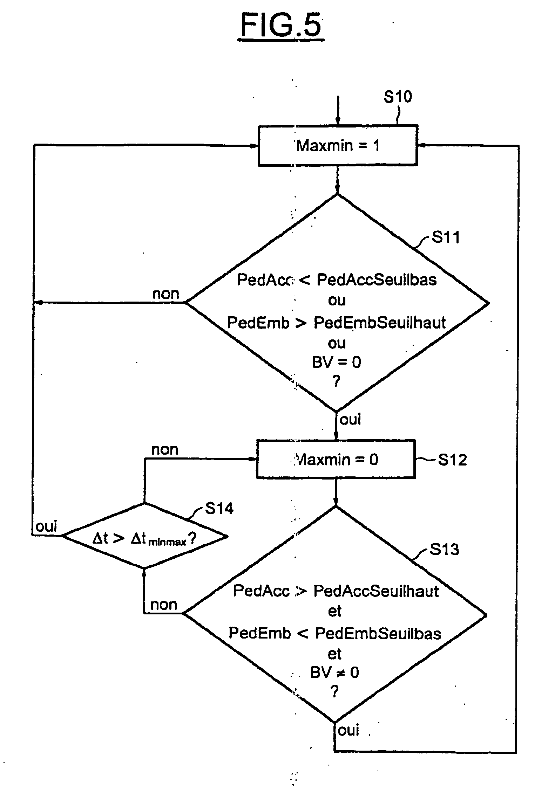

Sur la figure 5, on a représenté schématiquement un mode de mise en oeuvre d'une stratégie d'activation/désactivation d'un signal de commande de sélection Maxmin. Cette stratégie d'activation/désactivation peut être implémentée dans le moyen de commande de la sélection 44 décrit précédemment.

Cette stratégie d'activation/désactivation comprend une première étape d'initialisation S10 dans laquelle on active le signal de commande de sélection Maxmin. Puis, on effectue une deuxième étape de comparaison S11 dans laquelle on teste la validité des trois conditions suivantes :
- la position de la pédale d'accélérateur PedAcc est inférieure à un seuil bas PedAccSeuilbas ;
- la position de la pédale d'embrayage PedEmb est supérieure à un seuil haut PedEmbSeuilhaut ;
- aucun rapport de vitesse n'est engagé, c'est-à-dire que BV=0.

Si l'une des trois conditions est valide, on effectue alors une étape de désactivation S12, et on effectue à nouveau la première étape d'initialisation S10 dans le cas contraire.

Dans l'étape de désactivation S12, on désactive le signal de commande de sélection Maxmin. Puis, on effectue une autre étape de comparaison S13 dans laquelle on teste la validité des trois conditions suivantes :
- la position de la pédale d'accélérateur PedAcc est supérieure à un seuil haut PedAccSeuilhaut ;
- la position de la pédale d'embrayage PedEmb est inférieure à un seuil bas PedEmbSeuilbas ;
- un rapport de vitesse est engagé, c'est-à-dire que BV est différent de 0.

Lorsque les trois conditions précédentes sont valides, on effectue à nouveau la première étape d'initialisation S10 et on effectue une étape de comparaison supplémentaire S14 dans le cas contraire. Lors de l'étape de comparaison supplémentaire S14, on compare le temps écoulé Δt depuis la fin de l'étape de désactivation S12, avec un seuil de durée Δtₘᵢₙₘₐₓ. Lorsque la durée Δtₘᵢₙₘₐₓ est terminée, c'est-à-dire lorsque le temps écoulé Δt est supérieur au seuil de durée Δtₘᵢₙₘₐₓ, on effectue à nouveau la première étape d'initialisation S10, et on effectue à nouveau l'étape de désactivation S12 dans le cas contraire.

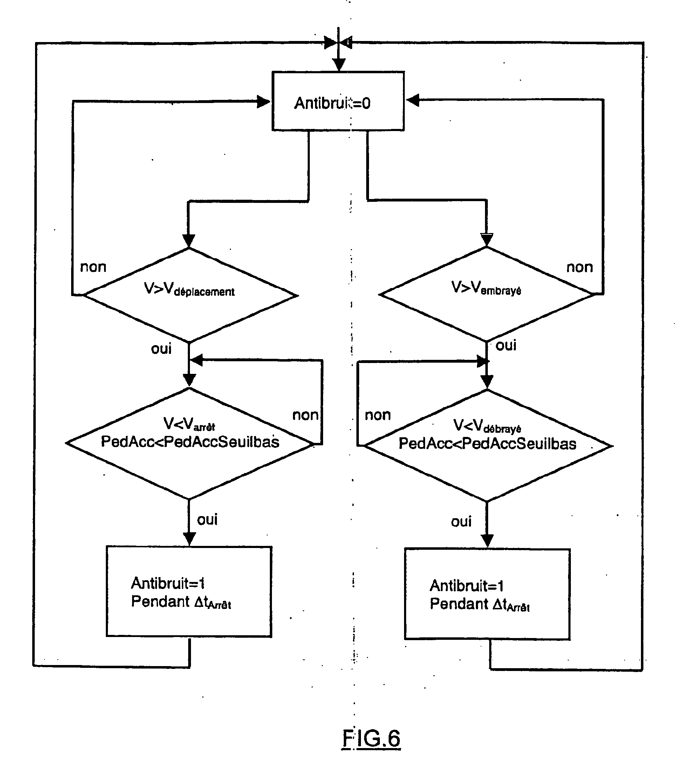

Suivant une variante illustrée sur la figure 6, la stratégie *Antibruit* peut être affinée pour mieux identifier les situations dans lesquelles elle a vocation à s'appliquer. En effet, l'expérience montre que certains conducteurs, lors des manoeuvres de demi-tour, n'attendent pas l'arrêt du véhicule pour passer du premier rapport de marche avant au rapport de marche arrière et réciproquement.

La stratégie *Antibruit* illustrée par la figure 4 n'est pas optimale dans ce cas, car elle annule la transmission de couple entre trains de roues pendant l'ensemble de la manoeuvre, alors que le conducteur demande une bonne réactivité du véhicule au décollage.

Suivant la variante de la figure 6, la stratégie d'activation/désactivation du signal de transmission *Antibruit* comprend deux branches parallèles, l'une faisant intervenir les seuils de vitesse V_{déplacement} et V_{arrêt} précédemment évoqués, l'autre des seuils légèrement plus élevés V_{embrayage} supérieur au seuil V_{déplacement} et V_{débrayage} supérieur au seuil V_{arrêt}.

Dans une première étape S1, on initialise le signal de commande de transmission *Antibruit* à zéro. Puis, on effectue une deuxième étape S21 dans laquelle on compare la vitesse courante du véhicule V avec un seuil de vitesse de déplacement du véhicule V_{déplacement}. Si la vitesse du véhicule V est supérieure au seuil de vitesse de déplacement V_{déplacement}, on effectue alors une troisième étape S31 de comparaison, et on effectue à nouveau la première étape S1 dans le cas contraire. Lorsque la vitesse du véhicule V est supérieure au seuil de vitesse de déplacement V_{déplacement}, on considère que le véhicule est dans un état roulant. Lors de la troisième étape S31 de comparaison, on compare la vitesse du véhicule V avec un seuil d'arrêt V_{arrêt} et la position de la pédale d'accélérateur avec un seuil PedAccSeuilbas. Si la vitesse du véhicule V est inférieure au seuil d'arrêt V_{arrêt} et si la position de la pédale d'accélérateur est en deçà du seuil PedAccSeuilbas, on effectue une quatrième étape S41 et on effectue à nouveau la troisième étape S31 de comparaison dans le cas contraire. Lors de la quatrième étape S41, on active le signal de commande de transmission *Antibruit* pendant une durée d'arrêt Δt_{arrêt}. Puis, à la fin de cette durée d'arrêt Δt_{arrêt}, on effectue à nouveau la première étape d'initialisation S1. Toutefois, un appui sur la pédale d'accélérateur fait passer immédiatement à Antibruit=0 sans attendre l'expiration de Δt_{arrêt}.

Parallèlement, on reproduit la même stratégie, avec des étapes S22, S32 et S42 pour les seuils seuil V_{embrayage} et V_{débrayage}. Ce dédoublement permet de couvrir un plus grand nombre de situations pratiques de manoeuvre.

Ainsi le signal de commande de transmission *Antibruit* n'est-il transmis que si le conducteur ralentit le véhicule sans demander de puissance. Le signal de commande de transmission *Antibruit* est ensuite délivré, comme précédemment, par le moyen de commande de la transmission 45 en direction du moyen de transmission 43 par une connexion 50. Le moyen de transmission 43 sélectionne la valeur reçue par la connexion 49 depuis le moyen de sélection 42 lorsque le signal de commande de transmission *Antibruit* est désactivé, et sélectionne la valeur nulle élaborée par un moyen 51 lorsque le signal de commande de transmission *Antibruit* est activé, de manière à interrompre brièvement la transmission de couple au train de roues arrière.

Cette stratégie permet, dans les cas où le conducteur n'appuie pas sur l'accélérateur durant la manoeuvre de demi-tour, de détendre la chaine cinématique de transmission au moment où le couple change de direction, afin d'accroitre la longévité de la transmission et de supprimer le bruit lors de cette manoeuvre. Mais elle privilégie l'adhérence et les performance de décollage dans les situations où, bien que le véhicule décélère et roule au pas, le conducteur appuie sur l'accélérateur.

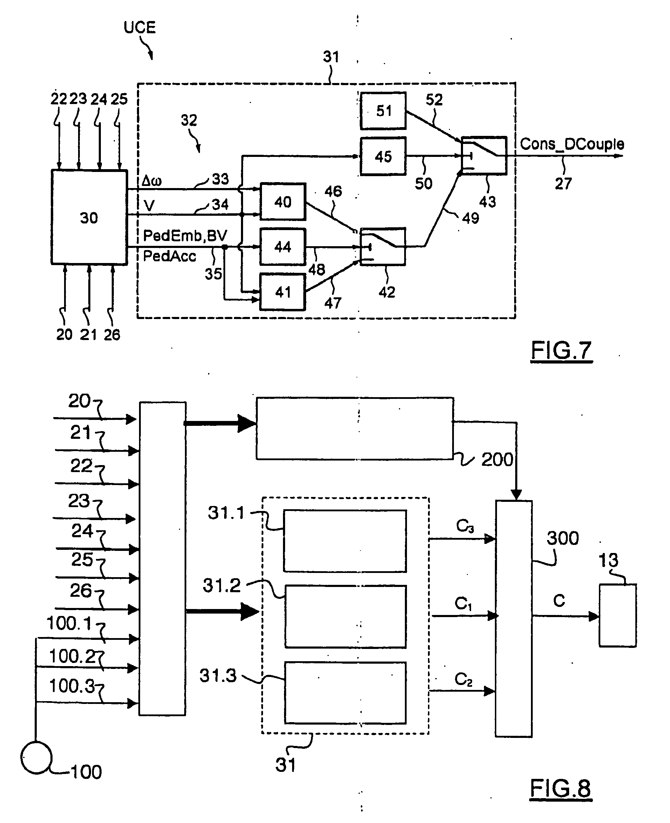

Sur la figure 7 est illustrée une variante de réalisation des moyens d'élaboration 31, qui se distingue de la figure 2 par le fait que les moyens de détermination secondaire 41 de la deuxième valeur Cₘᵢₙ de consigne prennent en compte non seulement la vitesse du véhicule V, mais également le rapport de vitesse engagée BV. L'objectif est ici de mieux identifier, en mode tout terrain, les situations requérant l'application d'une valeur Cₘᵢₙ constant.

Trois différentes stratégies d'élaboration de la deuxième valeur Cₘᵢₙ peuvent être identifiées :
- lorsque le rapport engagé est le premier rapport de marche avant ou la marche arrière et que véhicule roule à faible vitesse, c'est-à-dire lorsque la vitesse du véhicule est inférieure à un seuil minimum, la deuxième valeur Cₘᵢₙ est constante et est égale à une constante minimum qui représente un compromis entre une prestation de franchissement et une réduction de la consommation en carburant, ainsi que la possibilité de répartir le couple sur les quatre roues en descente sans appuyer sur la pédale d'accélérateur, afin d'avoir une motricité optimale. Le seuil de vitesse minimum et la constante minimum sont réglables lors de la mise au point et sauvegardés dans une mémoire non volatile du véhicule. L'avantage de cette stratégie réside dans sa simplicité et donc sa fiabilité.
- lorsque le rapport de transmission de la boîte de vitesse est le deuxième rapport ou un rapport supérieur et que le véhicule roule à faible ou moyenne vitesse, c'est-à-dire en dessous d'un seuil maximum qui peut être égal ou supérieur au seuil minimum, la deuxième valeur Cₘᵢₙ est fonction de la vitesse du véhicule V. Cette fonction est décroissante entre la constante minimum et zéro. Les prestations de franchissement sont ainsi garanties et la consommation en carburant est réduite par rapport à la stratégie à vitesse faible. Le seuil de vitesse maximum est également réglable lors de la mise au point et sauvegardé dans une mémoire non volatile.
- lorsque le véhicule roule à vitesse élevée, c'est-à-dire lorsque la vitesse du véhicule V est supérieure au seuil maximum, la deuxième valeur Cₘᵢₙ est nulle. La consommation du véhicule est alors minimale.

La deuxième valeur Cₘᵢₙ de la consigne de distribution de couple *Cons_DCouple* est ensuite utilisée comme dans le premier exemple de réalisation de l'invention.

L'ensemble de la description précédente est relatif à la conduite du véhicule en mode tout terrain. Ce mode peut être le seul proposé sur le véhicule. Il peut également être un mode parmi plusieurs qui peuvent être sélectionnés par le conducteur. Selon une variante représentée sur la figure 8, le dispositif de distribution du couple moteur entre le train avant et le train arrière comporte un commutateur manuel 100, permettant au conducteur de sélectionner un mode à deux roues motrice, un mode routier et un mode tout-terrain. Dans une telle configuration, l'unité de commande électronique est configurée pour recevoir un ou plusieurs signaux représentatifs de l'état du commutateur, par une connexion 101, en plus des éléments déjà évoqués dans le premier mode de réalisation, à savoir la position de la pédale d'accélérateur 11 émise depuis le capteur de position 18 par une connexion 20, la position de la pédale d'embrayage 12 émise depuis le capteur de position 19 par une connexion 21, les vitesses des roues 3, 4, 6 et 7 émises respectivement par les capteurs de vitesse 14 à 17 et transmises respectivement par des connexions 22 à 25 et l'information du rapport de vitesse engagé depuis la boîte de vitesses 10 via une connexion 26.

Comme dans l'exemple précédent, L'UCE comprend des moyens de calcul 30 pour calculer différentes informations à partir des informations reçues depuis les éléments du véhicule automobile et pour transmettre les informations calculées par un réseau filaire 32 vers des moyens d'élaboration 310 comportant des moyens d'élaboration 31 d'une consigne en mode tout-terrain, des moyens d'élaboration 31A en mode routier, et des moyens d'élaboration 31B d'une consigne en mode deux roues motrices.

Les moyens d'élaboration 31 de la consigne en mode tout-terrain sont identiques aux moyens d'élaboration illustrés en figure 2 et 3 et décrit précédemment en liaison avec le premier exemple de réalisation de l'invention.

Les moyens d'élaboration 31 A de la consigne en mode routier tiennent compte essentiellement de la vitesse du véhicule V et de l'écart de vitesse Δω entre le train avant et le train arrière. Ils peuvent également prendre en compte la température θ de l'actionneur, qui peut être mesurée à l'aide d'un capteur de température ou estimée à partir de l'historique de l'écart de vitesse Δω, comme décrit par exemple dans la demande W02010/007271. Les moyens d'élaboration 31 A peuvent également être pourvus de moyens spécifiques pour optimiser la consigne au démarrage, comme décrit par exemple dans le document W02009/095627. Les moyens d'élaboration 31 A peuvent également être pourvus de moyens spécifiques pour optimiser la consigne dans les virages ou dans les situations de freinage, comme décrit dans la demande W02007/138221.

Les moyens d'élaboration 31B délivrent quant à eux une consigne égale à zéro.

l'UCE comporte en outre un bloc 200 dédié à l'identification de la volonté du conducteur et au choix du mode de fonctionnement du système. Ce bloc lit la position du commutateur manuel 100, calculée par le calculateur 30 ainsi que, le cas échéant, la vitesse du véhicule, pour délivrer un signal de choix du mode de fonctionnement par une connexion 201 à un bloc 300 dédié à la génération d'une commande de transfert de couple lissé sans rupture. Le bloc de génération de la commande de transfert de couple reçoit les valeurs de consigne élaborées dans les moyens d'élaboration 31, 31 A et 31B, et émet une consigne de couple qui est transmise à l'actionneur 13. En l'occurrence, la consigne de couple émise est celle des trois valeurs de consigne correspondant au choix du mode de fonctionnement retenu par le bloc 200. En période de transition entre deux mode de fonctionnement, la consigne de couple est lissée de manière transitoire pour ne pas créer de rupture si la valeur de consigne du moyen d'élaboration cible est différente de celle calculée par le moyen d'élaboration d'origine.

Naturellement, l'invention n'est pas réduite à des véhicules à exactement quatre roues motrices. Elle a vocation au contraire à s'appliquer à tout véhicule ayant plusieurs trains de roues motrices, chaque train de roues pouvant avoir un nombre quelconque de roues, de préférence supérieur ou égal à deux.

Enfin, il est possible de combiner entre elles des caractéristiques techniques des différents modes de réalisation, pour réaliser d'autres variantes.

## Revendications

1. Dispositif de distribution (1) d'un couple moteur entre un train avant (2) et un train arrière (5) d'un véhicule automobile à au moins quatre roues motrices (3, 4, 6, 7), comprenant un actionneur piloté (13) et configuré pour distribuer le couple moteur, et des moyens de calcul (30) pour calculer une vitesse du véhicule et un écart de vitesse entre le train avant (2) et le train arrière (5), **caractérisé en ce qu'**il comprend des moyens d'élaboration (31) pour élaborer une consigne de distribution de couple destinée à l'actionneur (13), les moyens d'élaboration (31) comportant un moyen de détermination initial (40) pour déterminer une première valeur de la consigne de distribution de couple égale, soit à une constante maximum si la vitesse du véhicule est inférieure à un seuil bas, soit à une fonction de la vitesse du véhicule et de l'écart de vitesse si la vitesse du véhicule est comprise entre le seuil bas et un seuil haut, soit à zéro si la vitesse du véhicule est supérieure au seuil haut.

2. Dispositif selon la revendication 1, dans lequel le moyen de détermination initial (40) est configuré pour déterminer la première valeur de la consigne de distribution de couple comprise dans un intervalle dont les bornes varient en fonction de la vitesse du véhicule, les bornes étant distinctes l'une de l'autre lorsque la vitesse du véhicule est comprise entre le seuil bas et le seuil haut.

3. Dispositif selon la revendication 2, dans lequel le moyen de détermination initial (40) est configuré pour déterminer un seuil de vitesse intermédiaire compris entre le seuil bas et le seuil haut, la borne inférieure de l'intervalle étant nulle lorsque la vitesse du véhicule est comprise entre le seuil de vitesse intermédiaire et le seuil haut.

4. Dispositif selon l'une des revendications 1 à 3, dans lequel les moyens d'élaboration (31) comprennent un moyen de détermination secondaire (41) pour déterminer une deuxième valeur de la consigne de distribution de couple inférieure à la première valeur et égale, soit à une constante minimum si la vitesse du véhicule est inférieure à un seuil minimum, soit uniquement à une fonction de la vitesse du véhicule si la vitesse du véhicule est comprise entre le seuil minimum et un seuil maximum, soit à zéro si la vitesse du véhicule est supérieure au seuil maximum, et un moyen de sélection (42) pour sélectionner la première ou la deuxième valeur afin d'élaborer la consigne de distribution de couple.

5. Dispositif selon l'une des revendications 1 à 3, dans lequel les moyens de calcul (30) sont configurés pour calculer un rapport de vitesse engagé, les moyens d'élaboration (31) comprenant un moyen de détermination secondaire (41) pour déterminer une deuxième valeur de la consigne de distribution de couple inférieure à la première valeur et égale, soit à une constante minimum si la vitesse du véhicule est inférieure à un seuil minimum alors que le rapport de vitesse engagé est le premier rapport de marche avant ou le rapport de marche arrière, soit à zéro si la vitesse du véhicule est supérieure au seuil minimum ou si le rapport de vitesse engagé est différent du premier rapport de marche avant et du rapport de marche arrière, et un moyen de sélection (42) pour sélectionner la première ou la deuxième valeur afin d'élaborer la consigne de distribution de couple.

6. Dispositif selon la revendication 4 ou la revendication 5, dans lequel les moyens de calcul (30) sont configurés pour calculer une position de la pédale d'accélération et un rapport de vitesse engagé, et les moyens d'élaboration (31) comprennent un moyen de commande de la sélection (44) configuré pour activer un signal de commande de sélection si la position de 1a pédale d'accélération est supérieure à un seuil d'accélération haut et si le rapport de vitesse engagé est non nul, le moyen de sélection (42) étant configuré pour recevoir le signal de commande de sélection et pour sélectionner la première valeur si le signal de commande de sélection est activé ou la deuxième valeur si le signal de commande de sélection est désactivé.

7. Dispositif selon l'une des revendications 4 à 6, dans lequel les moyens d'élaboration (31) comprennent un moyen de transmission (43) pour transmettre la valeur sélectionnée par le moyen de sélection (42), ou une valeur nulle, afin d'élaborer la consigne de distribution de couple, et un moyen de commande de la transmission (45) configuré pour activer pendant une durée d'arrêt un signal de commande de transmission si la vitesse du véhicule est inférieure à un seuil d'arrêt, le moyen de transmission (43) étant configuré pour recevoir le signal de commande de transmission et pour transmettre la valeur sélectionnée par le moyen de sélection (42) si le signal de commande de transmission est désactivé ou la valeur nulle si le signal de commande de transmission est activé.

8. Dispositif selon l'une des revendications 4 à 6, dans lequel les moyens de calcul (30) sont configurés pour calculer une position de la pédale d'accélération, les moyens d'élaboration (31) comprenant un moyen de transmission (43) pour transmettre la valeur sélectionnée par le moyen de sélection (42), ou une valeur nulle, afin d'élaborer la consigne de distribution de couple, et un moyen de commande de la transmission (45) configuré pour activer pendant une durée d'arrêt un signal de commande de transmission si la vitesse du véhicule décroit en dessous d'un seuil d'arrêt alors que la pédale d'accélération n'est pas enfoncée, le moyen de transmission (43) étant configuré pour recevoir le signal de commande de transmission et pour transmettre la valeur sélectionnée par le moyen de sélection (42) si le signal de commande de transmission est désactivé ou la valeur nulle si le signal de commande de transmission est activé.

9. Procédé de distribution d'un couple moteur entre un train avant (2) et un train arrière (5) d'un véhicule automobile à au moins quatre roues motrices (3, 4, 6, 7), dans lequel on calcule une vitesse du véhicule et un écart de vitesse entre le train avant (2) et le train arrière (5), **caractérisé en ce qu'**on détermine une première valeur de consigne de distribution de couple égale, soit à une constante maximum si la vitesse du véhicule est inférieure à un seuil bas, soit à une fonction de la vitesse du véhicule et de l'écart de vitesse si la vitesse du véhicule est comprise entre le seuil bas et un seuil haut, soit à zéro si la vitesse du véhicule est supérieure au seuil haut, et on distribue le couple moteur à partir de la consigne de distribution de couple déterminée.

10. Procédé selon la revendication 9, dans lequel, lors de l'étape de détermination, on détermine en outre la première valeur de la consigne de distribution de couple comprise dans un intervalle dont les bornes varient en fonction de la vitesse du véhicule, les bornes étant distinctes l'une de l'autre lorsque la vitesse du véhicule est comprise entre le seuil bas et le seuil haut.

11. Procédé selon la revendication 10, dans lequel, lors de l'étape de détermination, on détermine un seuil de vitesse intermédiaire compris entre le seuil bas et le seuil haut, la borne inférieure de l'intervalle étant nulle lorsque la vitesse du véhicule est comprise entre le seuil de vitesse intermédiaire et le seuil haut.

12. Procédé selon l'une des revendications 9 à 11, dans lequel on détermine une deuxième valeur de consigne de distribution de couple inférieure à la première valeur et égale, soit à une constante minimum si la vitesse du véhicule est inférieure à un seuil minimum, soit uniquement à une fonction de la vitesse du véhicule si la vitesse du véhicule est comprise entre le seuil minimum et un seuil maximum, soit à zéro si la vitesse du véhicule est supérieure au seuil maximum, et on sélectionne la première ou la deuxième valeur pour la détermination de la consigne de distribution de couple.

13. Procédé selon la revendication 12, dans lequel on calcule une position de la pédale d'accélération et un rapport de vitesse engagé, on active (S10) un signal de commande de sélection si la position de la pédale d'accélération est supérieure à un seuil d'accélération et si le rapport de vitesse engagé est non nul, et on sélectionne la première valeur si le signal de commande de sélection est activé ou la deuxième valeur si le signal de commande de sélection est désactivé.

14. Procédé selon l'une des revendications 12 ou 13, dans lequel on active (S4) pendant une durée d'arrêt un signal de commande de transmission si la vitesse du véhicule est inférieure à un seuil d'arrêt, et on transmet la première ou la deuxième valeur sélectionnée si le signal de commande de transmission est désactivé ou une valeur nulle si le signal de commande de transmission est activé pour la détermination de la consigne de distribution de couple.

## Patentansprüche

1. Vorrichtung (1) zur Verteilung eines Antriebsdrehmoments zwischen einer Vorderachse (2) und einer Hinterachse (5) eines Kraftfahrzeugs mit mindestens vier Antriebsrädern (3, 4, 6, 7), die einen gesteuerten Stellantrieb (13), der konfiguriert ist, um das Antriebsdrehmoment zu verteilen, und Recheneinrichtungen (30) enthält, um eine Geschwindigkeit des Fahrzeugs und eine Geschwindigkeitsabweichung zwischen der Vorderachse (2) und der Hinterachse (5) zu berechnen, **dadurch gekennzeichnet, dass** sie Erarbeitungseinrichtungen (31) zum Erarbeiten eines für den Stellantrieb (13) bestimmten Drehmomentverteilungssollwerts enthält, wobei die Erarbeitungseinrichtungen (31) eine Anfangsfestlegungseinrichtung (40) aufweisen, um einen ersten Wert des Drehmomentverteilungssollwerts festzulegen, der entweder gleich einer maximalen Konstante, wenn die Geschwindigkeit des Fahrzeugs niedriger als eine untere Schwelle ist, oder gleich einer Funktion der Geschwindigkeit des Fahrzeugs und der Geschwindigkeitsabweichung ist, wenn die Geschwindigkeit des Fahrzeugs zwischen der unteren Schwelle und einer oberen Schwelle liegt, oder auf Null ist, wenn die Geschwindigkeit des Fahrzeugs höher als die obere Schwelle ist.

2. Vorrichtung nach Anspruch 1, wobei die Anfangsfestlegungseinrichtung (40) konfiguriert ist, um den ersten Wert des Drehmomentverteilungssollwerts festzulegen, der in einem Intervall liegt, dessen Grenzen abhängig von der Geschwindigkeit des Fahrzeugs variieren, wobei die Grenzen sich voneinander unterscheiden, wenn die Geschwindigkeit des Fahrzeugs zwischen der unteren Schwelle und der oberen Schwelle liegt.

3. Vorrichtung nach Anspruch 2, wobei die Anfangsfestlegungseinrichtung (40) konfiguriert ist, um eine Zwischengeschwindigkeitsschwelle festzulegen, die zwischen der unteren Schwelle und der oberen Schwelle liegt, wobei die untere Grenze des Intervalls Null ist, wenn die Geschwindigkeit des Fahrzeugs zwischen der Zwischengeschwindigkeitsschwelle und der oberen Schwelle liegt.

4. Vorrichtung nach einem der Ansprüche 1 bis 3, wobei die Erarbeitungseinrichtungen (31) eine Sekundärfeststellungseinrichtung (41), um einen zweiten Wert des Drehmomentverteilungssollwerts zu bestimmen, der niedriger als der erste Wert und gleich entweder einer minimalen Konstante, wenn die Geschwindigkeit des Fahrzeugs niedriger als eine minimale Schwelle ist, oder nur gleich einer Funktion der Geschwindigkeit des Fahrzeugs, wenn die Geschwindigkeit des Fahrzeugs zwischen der minimalen Schwelle und einer maximalen Schwelle liegt, oder auf Null ist, wenn die Geschwindigkeit des Fahrzeugs höher als die maximale Schwelle ist, und eine Auswahleinrichtung (42) enthalten, um den ersten oder den zweiten Wert auszuwählen, um den Drehmomentverteilungssollwert zu erarbeiten.

5. Vorrichtung nach einem der Ansprüche 1 bis 3, wobei die Recheneinrichtungen (30) konfiguriert sind, um einen eingelegten Gang zu berechnen, wobei die Erarbeitungseinrichtungen (31) eine Sekundärfeststellungseinrichtung (41), um einen zweiten Wert des Drehmomentverteilungssollwerts festzulegen, der niedriger als der erste Wert und gleich entweder einer minimalen Konstante, wenn die Geschwindigkeit des Fahrzeugs niedriger als eine minimale Schwelle ist, während der eingelegte Gang der erste Vorwärtsgang oder der Rückwärtsgang ist, oder auf Null ist, wenn die Geschwindigkeit des Fahrzeugs höher als die minimale Schwelle ist, oder wenn der eingelegte Gang sich vom ersten Vorwärtsgang und vom Rückwärtsgang unterscheidet, und eine Auswahleinrichtung (42) enthalten, um den ersten oder den zweiten Wert auszuwählen, um den Drehmomentverteilungssollwert zu erarbeiten.

6. Vorrichtung nach Anspruch 4 oder Anspruch 5, wobei die Recheneinrichtungen (30) konfiguriert sind, um eine Stellung des Gaspedals und einen eingelegten Gang zu berechnen, und die Erarbeitungseinrichtungen (31) eine Steuereinrichtung der Auswahl (44) enthalten, die konfiguriert ist, um ein Auswahlsteuersignal zu aktivieren, wenn die Stellung des Gaspedals höher als eine obere Beschleunigungsschwelle und der eingelegte Gang ungleich Null ist, wobei die Auswahleinrichtung (42) konfiguriert ist, um das Auswahlsteuersignal zu empfangen, und um den ersten Wert auszuwählen, wenn das Auswahlsteuersignal aktiviert ist, oder den zweiten Wert auszuwählen, wenn das Auswahlsteuersignal deaktiviert ist.

7. Vorrichtung nach einem der Ansprüche 4 bis 6, wobei die Erarbeitungseinrichtungen (31) eine Übertragungseinrichtung (43), um den von der Auswahleinrichtung (42) ausgewählten Wert oder einen Wert Null zu übertragen, um den Drehmomentverteilungssollwert zu erarbeiten, und eine Steuereinrichtung der Übertragung (45) enthalten, die konfiguriert ist, um während einer Stillstandszeit ein Übertragungssteuersignal zu aktivieren, wenn die Geschwindigkeit des Fahrzeugs niedriger als eine Stillstandsschwelle ist, wobei die Übertragungseinrichtung (43) konfiguriert ist, um das Übertragungssteuersignal zu empfangen, und um den von der Auswahleinrichtung (42) ausgewählten Wert, wenn das Übertragungssteuersignal deaktiviert ist, oder den Wert Null zu übertragen, wenn das Übertragungssteuersignal aktiviert ist.

8. Vorrichtung nach einem der Ansprüche 4 bis 6, wobei die Recheneinrichtungen (30) konfiguriert sind, um eine Stellung des Gaspedals zu berechnen, wobei die Erarbeitungseinrichtungen (31) eine Übertragungseinrichtung (43), um den von der Auswahleinrichtung (42) ausgewählten Wert oder einen Wert Null zu übertragen, um den Drehmomentverteilungssollwert zu erarbeiten, und eine Steuereinrichtung der Übertragung (45) enthalten, die konfiguriert ist, um während einer Stillstandszeit ein Übertragungssteuersignal zu aktivieren, wenn die Geschwindigkeit des Fahrzeugs unter eine Stillstandsschwelle sinkt, während das Gaspedal nicht eingedrückt ist, wobei die Übertragungseinrichtung (43) konfiguriert ist, um das Übertragungssteuersignal zu empfangen, und um den von der Auswahleinrichtung (42) ausgewählten Wert, wenn das Übertragungssteuersignal deaktiviert ist, oder den Wert Null zu übertragen, wenn das Übertragungssteuersignal aktiviert ist.

9. Verfahren zur Verteilung eines Antriebsdrehmoments zwischen einer Vorderachse (2) und einer Hinterachse (5) eines Kraftfahrzeugs mit mindestens vier Antriebsrädern (3, 4, 6, 7), wobei eine Geschwindigkeit des Fahrzeugs und eine Geschwindigkeitsabweichung zwischen der Vorderachse (2) und der Hinterachse (5) berechnet werden, **dadurch gekennzeichnet, dass** ein erster Wert eines Drehmomentverteilungssollwerts gleich entweder einer maximalen Konstante, wenn die Geschwindigkeit des Fahrzeugs niedriger als eine untere Schwelle ist, oder gleich einer Funktion der Geschwindigkeit des Fahrzeugs und der Geschwindigkeitsabweichung, wenn die Geschwindigkeit des Fahrzeugs zwischen der unteren Schwelle und einer oberen Schwelle liegt, oder auf Null festgelegt wird, wenn die Geschwindigkeit des Fahrzeugs höher als die obere Schwelle ist, und das Antriebsdrehmoment ausgehend von dem festgelegten Drehmomentverteilungssollwert verteilt wird.

10. Verfahren nach Anspruch 9, wobei im Festlegungsschritt außerdem der erste Wert des Drehmomentverteilungssollwerts festgelegt wird, der in einem Intervall liegt, dessen Grenzen abhängig von der Geschwindigkeit des Fahrzeugs variieren, wobei die Grenzen sich voneinander unterscheiden, wenn die Geschwindigkeit des Fahrzeugs zwischen der unteren Schwelle und der oberen Schwelle liegt.

11. Verfahren nach Anspruch 10, wobei im Festlegungsschritt eine Zwischengeschwindigkeitsschwelle festgelegt wird, die zwischen der unteren Schwelle und der oberen Schwelle liegt, wobei die untere Grenze des Intervalls Null ist, wenn die Geschwindigkeit des Fahrzeugs zwischen der Zwischengeschwindigkeitsschwelle und der oberen Schwelle liegt.

12. Verfahren nach einem der Ansprüche 9 bis 11, wobei ein zweiter Wert des Drehmomentverteilungssollwerts niedriger als der erste Wert und gleich entweder einer minimalen Konstante, wenn die Geschwindigkeit des Fahrzeugs niedriger als eine minimale Schwelle ist, oder nur gleich einer Funktion der Geschwindigkeit des Fahrzeugs, wenn die Geschwindigkeit des Fahrzeugs zwischen der minimalen Schwelle und einer maximalen Schwelle liegt, oder auf Null ist, wenn die Geschwindigkeit des Fahrzeugs höher als die maximale Schwelle ist, und der erste oder der zweite Wert für die Festlegung des Drehmomentverteilungssollwerts gewählt wird.

13. Verfahren nach Anspruch 12, wobei eine Stellung des Gaspedals und ein eingelegter Gang berechnet werden, ein Auswahlsteuersignal aktiviert wird (S10), wenn die Stellung des Gaspedals höher als eine Beschleunigungsschwelle ist und wenn der eingelegte Gang ungleich Null ist, und der erste Wert gewählt wird, wenn das Auswahlsteuersignal aktiviert ist, oder der zweite Wert gewählt wird, wenn das Auswahlsteuersignal deaktiviert ist.

14. Verfahren nach einem der Ansprüche 12 oder 13, wobei während einer Stillstandszeit ein Übertragungssteuersignal aktiviert wird (S4), wenn die Geschwindigkeit des Fahrzeugs niedriger als eine Anhaltschwelle ist, und der erste oder der zweite ausgewählte Wert übertragen wird, wenn das Übertragungssteuersignal deaktiviert ist, oder ein Wert Null übertragen wird, wenn das Übertragungssteuersignal für die Festlegung des Drehmomentverteilungssollwerts aktiviert ist.

## Claims

1. Device (1) for distributing engine torque between a front axle system (2) and a rear axle system (5) of a motor vehicle that has at least four driven wheels (3, 4, 6, 7), comprising a controlled actuator (13) and configured to distribute the engine torque, and calculation means (30) for calculating a speed of the vehicle and a speed differential between the front axle system (2) and the rear axle system (5), **characterized in that** it comprises formulation means (31) for formulating a torque distribution datum intended for the actuator (13), the formulation means (31) comprising an initial determination means (40) for determining a first value of the torque distribution datum that is equal either to a maximum constant if the vehicle speed is below a low threshold, or to a function of the vehicle speed and of the speed differential if the vehicle speed is comprised between the low threshold and a high threshold, or to zero if the vehicle speed is above the high threshold.

2. Device according to Claim 1, in which the initial determination means (40) is configured to determine the first value of the torque distribution datum comprised in an interval the limits of which vary as a function of vehicle speed, the limits being distinct from one another when the vehicle speed is comprised between the low threshold and the high threshold.

3. Device according to Claim 2, in which the initial determination means (40) is configured to determine an intermediate speed threshold comprised between the low threshold and the high threshold, the lower limit of the interval being zero when the vehicle speed is comprised between the intermediate speed threshold and the high threshold.

4. Device according to one of Claims 1 to 3, in which the formulation means (31) comprise a secondary determination means (41) for determining a second torque distribution datum value lower than the first value and equal either to a minimum constant if the vehicle speed is below a minimum threshold, or only to a function of vehicle speed if the vehicle speed is comprised between the minimum threshold and a maximum threshold, or to zero if the vehicle speed is above the maximum threshold, and a selection means (42) for selecting the first or the second value in order to formulate the torque distribution datum.

5. Device according to one of Claims 1 to 3, in which the calculation means (30) are configured to calculate an engaged transmission ratio, the formulation means (31) comprising a secondary determination means (41) for determining a second torque distribution datum value lower than the first value and equal either to a minimum constant if the vehicle speed is below a minimum threshold when the engaged transmission ratio is the first forward gear or reverse gear, or to zero if the vehicle speed is above the minimum threshold or if the engaged transmission ratio is other than the first forward gear and reverse gear, and a selection means (42) for selecting the first or the second value in order to formulate the torque distribution datum.

6. Device according to Claim 4 or Claim 5, in which the calculation means (30) are configured to calculate a throttle pedal position and an engaged transmission ratio, and the formulation means (31) comprise a selection control means (44) configured to activate a selection control signal if the position of the throttle pedal is above an upper acceleration threshold and if the engaged transmission ratio is non-zero, the selection means (42) being configured to receive the selection control signal and to select the first value if the selection control signal is activated or the second value if the selection control signal is deactivated.

7. Device according to one of Claims 4 to 6, in which the formulation means (31) comprise a transmission means (43) for transmitting the value selected by the selection means (42), or a zero value, in order to formulate the torque distribution datum, and a transmission control means (45) configured to activate a transmission control signal during a stationary period if the vehicle speed is below a stationary threshold, the transmission means (43) being configured to receive the transmission control signal and to transmit the value selected by the selection means (42) if the transmission control signal is deactivated or the zero value if the transmission control signal is activated.

8. Device according to one of Claims 4 to 6, in which the calculation means (30) are configured to calculate a throttle pedal position, the formulation means (31) comprising a transmission means (43) for transmitting the value selected by the selection means (42), or a zero value, in order to formulate the torque distribution datum, and a transmission control means (45) configured to activate a transmission control signal during a stationary duration if the vehicle speed drops below a stationary threshold when the throttle pedal is not depressed, the transmission means (43) being configured to receive the transmission control signal and to transmit the value selected by the selection means (42) if the transmission control signal is deactivated or the zero value if the transmission control signal is activated.

9. Method for distributing engine torque between a front axle system (2) and a rear axle system (5) of a motor vehicle having at least four driven wheels (3, 4, 6, 7), in which method a vehicle speed and a speed discrepancy between the front axle system (2) and the rear axle system (5) are calculated, **characterized in that** a first torque distribution datum value is determined, this being equal either to a maximum constant if the vehicle speed is below a low threshold or to a function of the vehicle speed and of the speed discrepancy if the vehicle speed is comprised between the low threshold and a high threshold, or to zero if the vehicle speed is above the high threshold, and the engine torque is distributed on the basis of the torque distribution datum determined.

10. Method according to Claim 9, in which, during the determination step, the first value of the torque distribution datum comprised in an interval the limits of which vary as a function of vehicle speed is also determined, the limits being distinct from one another when the vehicle speed is comprised between the low threshold and the high threshold.

11. Method according to Claim 10, in which, during the determination step, an intermediate speed threshold comprised between the low threshold and the high threshold is determined, the lower limit of the interval being zero when the vehicle speed is comprised between the intermediate speed threshold and the high threshold.

12. Method according to one of Claims 9 to 11, in which a second torque distribution datum value is determined that is lower than the first value and equal either to a minimum constant if the vehicle speed is below a minimum threshold, or only to a function of the vehicle speed if the vehicle speed is comprised between the minimum threshold and a maximum threshold, or to zero if the vehicle speed is above the maximum threshold, and the first or the second value is selected in order to determine the torque distribution datum.

13. Method according to Claim 12, in which a throttle pedal position and an engaged transmission ratio are calculated, a selection control signal is activated (S10) if the throttle pedal position is above an acceleration threshold and if the engaged transmission ratio is non-zero, and the first value is selected if the selection control signal is activated or the second value is selected if the selection control signal is deactivated.

14. Method according to either of Claims 12 and 13, in which a transmission control signal is activated (S4) during a stationary period if the vehicle speed is below a stationary threshold, and the first or second selected value is transmitted if the transmission control signal is deactivated or a zero value is transmitted if the transmission control signal is activated for determining the torque distribution datum.
